(19) Europäisches Patentamt / European Patent Office / Office européen des brevets

(11) **EP 4 187 481 A1**

(12) **EUROPEAN PATENT APPLICATION**

(43) Date of publication:
**31.05.2023 Bulletin 2023/22**

(21) Application number: **21211196.7**

(22) Date of filing: **30.11.2021**

(51) International Patent Classification (IPC):
**G06T 5/00** (2006.01)    **G06T 5/40** (2006.01)

(52) Cooperative Patent Classification (CPC):
**G06T 5/009; G06T 5/40;** G06T 2207/10116;
G06T 2207/20008; G06T 2207/20016;
G06T 2207/20021; G06T 2207/30008

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **AGFA NV**
**2640 Mortsel (BE)**

(72) Inventor: **SOONS, Joris**
**2640 Mortsel (BE)**

(74) Representative: **Verbrugghe, Anne Marie L.**
**Agfa HealthCare NV**
**IP Department 3802**
**Septestraat 27**
**2640 Mortsel (BE)**

(54)    **GREYSCALE GRADATION PROCESSING METHOD**

(57)    This invention is related to a gradation method of a contrast enhanced digital gray value image. The gradation function is the conversion of grey value pixels into density values suitable for reproduction or display. The gradation method of the invention is based on combining a set of feature specific segmentation curves that are obtained through an image segmentation step of an original image into a set of image objects, followed by a feature specific processing thereof.

Fig. 3

# Description

## Technical Field

The present invention relates generally to a method to for processing digital images. More particularly, the invention relates to a method of enhancing the contrast of a grey value image such as a medical image.

## Background of the invention

Nowadays several medical image acquisition techniques and systems exist that render a digital image representation of a medical image, e.g. a radiographic image.

One example of such a system is a computed radiography system wherein a radiation image is recorded on a temporary storage medium, more particularly a photostimulable phosphor screen. In such a system a digital image representation is obtained by scanning the screen with radiation of (a) wavelength(s) within the stimulating wavelength range of the phosphor and by detecting the light emitted by the phosphor upon stimulation.

More recently, the indirect systems are increasingly replaced by systems wherein a radiographic image is recorded in a solid-state sensor comprising a radiation sensitive layer and a layer of electronic read out circuitry.

Still another example of a computed radiography system is a system wherein a radiographic image is recorded on a conventional X-ray film and wherein that film is developed and subsequently subjected to digital image scanning. Additionally other systems such as a tomosynthesis or tomography systems may be envisaged.

The digital image representation of the medical image acquired by one of the above systems can then be used for generating a visible image on an output device on which the diagnosis can be performed. For this purpose the digital image representation is applied to a hard copy recorder or to a display device. Commonly the digital image representation is subjected to image processing prior to hard copy recording or display.

In order to convert the digital image information optimally into a visible image on a medium on which the diagnosis is performed, a multiscale image processing method (also called multiresolution image processing method) has been developed by means of which the contrast of an image is enhanced.

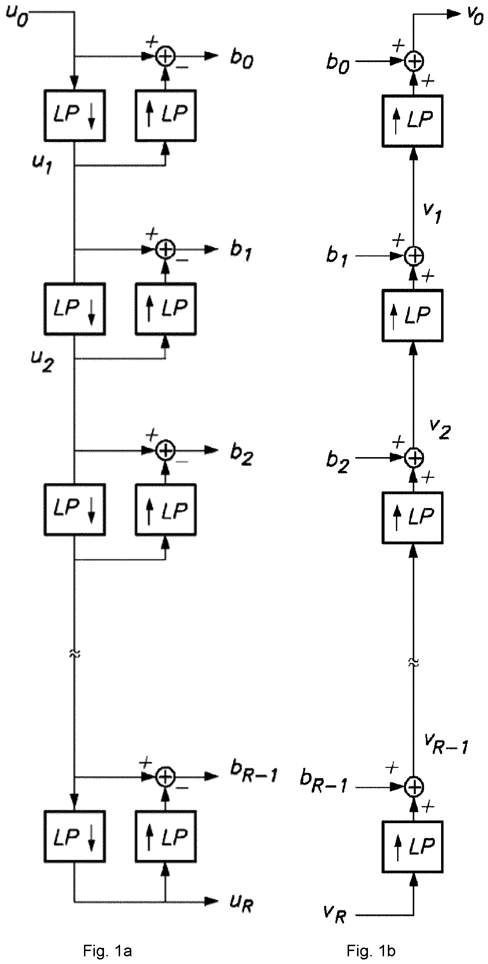

According to this multiscale image processing method an image represented by an array of pixel values is processed by applying the following steps. First the original image is decomposed into a sequence of detail images at multiple scales and occasionally a residual image. A decomposition process according to the Burt pyramid transform being schematically illustrated in Fig. 1. Next, the pixel values of the detail images are modified by applying to these pixel values at least one nonlinear monotonically increasing odd conversion function with a gradient that gradually decreases with increasing argument values. Finally, a processed image is computed by applying a reconstruction algorithm to the residual image and the modified detail images, the reconstruction algorithm being the inverse of the above decomposition process.

The above image processing technique has been described extensively in European patent EP 527 525. The described method is advantageous over conventional image processing techniques such as unsharp masking etc. because it increases the visibility of subtle details in the image and because it increases the faithfulness of the image reproduction without introducing artefacts.

The conversion of grey value pixels into density values suitable for reproduction or display comprises the selection of a relevant subrange of the grey value pixel data and the conversion of the data in this subrange according to a specific gradation function. Commonly, the gradation function is defined by means of a lookup table, which, for each grey value, stores the corresponding density value.

Preferably the relevant subrange and the gradation function to be applied are adapted to the object and to the examination type so that optimal and constant image quality can be guaranteed.

The shape of the gradation function is critical. It determines how the subintervals of the density range of the visible image are associated with subranges of grey values, in a monotonic but mostly nonlinear way.

In the intervals where the function is steep, a narrow subrange of grey values is mapped onto the available output density interval. On the other hand, in those intervals where the function has a gentle gradient, the available output density interval is shared by a wide subrange of grey values. If the gradation function has a gentle gradient in the low density half and evolves to steeper behaviour in the high density portion, then most of the grey values are mapped to low density, and the overall appearance of the result image will be bright. Reversely, if the gradation function takes off steeply, and evolves to the high density with decreasing gradient, then most of the grey values are mapped to high density, yielding a dark, greyish look.

This way, it is possible to determine how the density intervals are distributed across the available range of grey values, by manipulating the shape of the gradation function. As a general rule, grey value subranges that are densely populated (i.e. peaks in the grey value histogram) should be mapped onto a wide output density interval. Reversely, intervals of grey values that occur infrequently in the image should be concentrated on narrow density intervals. This paradigm known as histogram equalization leads to enhanced differentiation of grey value regions in an image.

The density of pixels and image regions is determined by the corresponding ordinate value of the gradation function. The contrast amplification of pixels and image regions on the other hand, is determined by the corresponding derivative value (i.e. the gradient) of the gradation function. As a consequence, if the shape of the gradation function is adjusted to accommodate a large subrange of grey values within a specified density interval, i.e. if the interval has to cope with wide latitude, then at the same time the contrast in that density interval will drop. On the other hand, if a density interval is assigned to only a narrow grey value subrange, then that interval will provide enhanced contrast. If requirements with respect to density and contrast amplification are conflicting, which is often the case, then a compromise is unavoidable.

In one embodiment of the multiscale image processing method as described in the above-mentioned European patent EP 527 525, the gradation function is applied after the reconstruction process, which is the inverse of the multiscale decomposition. The gradation function is applied to the final scale of reconstruction. As a consequence, the contrast-to-grey value relationship, which is specified by the derivative of the gradation function, is identical at all scales.

In some cases however, it is favourable to differentiate contrast adjustment depending on grey value and scale simultaneously. E.g. in chest images it is important to have high contrast in the smaller scales (i.e. fine detail contrast) at high grey values to enhance conspicuity of pneumothorax, but only moderate fine detail contrast in the low grey value areas like the mediastinum. At the same time, large scale contrast in the lower and mid grey values must be appropriate to visualise e.g. pleural masses.

In some embodiments disclosed in the above-mentioned European patent application EP 527 525 scale-dependent boosting or suppression of the contribution of detail information is applied. Two different implementations have been described.

In a first implementation the modified detail images are pixelwise multiplied by a coefficient in the last stages of the reconstruction process. The value of such a coefficient depends on the brightness of the pixels of the partially reconstructed image.

In a second implementation a partially reconstructed image is converted according to a monotonically increasing conversion function with gradually decreasing slope, for example a power function. Then the reconstruction process is continued until a full size reconstructed image is obtained. Finally the resulting image is converted according to a curve which is the inverse of the afore-mentioned conversion curve.

Although this disclosure describes scale-dependent suppression or boosting of the contribution of detail information, it does not describe the way in which an envisaged density nor contrast amplification as a function of grey value can be obtained.

In another European patent EP1341125, a method of generating a contrast enhanced version of a grey value image is described, by applying contrast amplification to a multiscale representation of the grey value image wherein density in the contrast enhanced version as a function of grey value and contrast amplification are specified independently. In other words, multiscale gradation is implemented by inserting a series of scale-specific conversion functions in the reconstruction process. At each stage in the reconstruction process where a conversion function is inserted, the latter is applied to the approximation image at a scale corresponding to the current iteration, and the result of conversion is used as the input image of the next iteration. This method of gradation is called multiscale gradation.

Although that the previous disclosure improves the gradation process by a multi-scale approach, it however still controls the output density by calculations or analysis performed on the greyvalue. This approach is intrinsically unstable as the content of a medical image may be very diverse. For instance, it is possible that 80% of the pixels of a medical image represent bone, whereas in a another case 80% of the pixels of the medical image represent soft tissue. A gradation of the processed image that is based on the assignment of a certain percentile of grey values to a certain output density range, this may lead to undesired results. An image mainly comprising a certain tissue type may be taken for another tissue type and be gradated and amplified accordingly (and thus wrongly).

It is a principal object of the present invention to provide a method for improving the final gradation step in the enhancement of a digital image taking into account the dynamic range of the output device on which the enhanced digital image is displayed.

It is an object of the present invention to provide a method for generating a contrast enhanced version of a grey value image that overcomes the prior art disadvantages. Further objects will become apparent from the description given below.

## Summary of invention

The above mentioned objects are realised by a method of generating a contrast enhanced version of a grey value image as set out in claim 1.

In the context of the present invention a grey value image is an image represented by grey values of its pixels. More particularly, the term grey value image may refer to the image supplied as an input to the multiscale decomposition according to an embodiment of the present invention, or it may refer to a complete or partial reconstruction of its multiscale representation, whether or not having been subjected to prior contrast enhancement processing.

According to the invention a contrast enhanced version of a grey value image is generated by applying for instance contrast amplification to a multiscale representation of the grey value image, or any other contrast enhancement algorithm. The pixels of the resulting image represent any pixel value quantity that is suited for soft- or hardcopy viewing, such as perceptually linear pixel values (so-called p-values) or optical density.

In a multiscale algorithm contrast enhancement is achieved by subjecting a raw digital image to a multiscale decomposition. The image is decomposed into at least two detail images representing detail at several successive scales. This technique has been described extensively in EP 527 525.

The pixels of the detail images represent the amount of variation of pixel values of the original image at the scale of the detail image, whereby scale refers to spatial extent of these variations. A residual image can also be generated which is an approximation of the original image with omission of all variations comprised in the detail images. The detail images at subsequent scales (or resolution levels) are called multiscale layers, or simply layers.

In a first embodiment of computing a multiscale transform the detail images at successively larger scales are obtained as the result of each of $R$ iterations of the following steps, as depicted in Fig. 1a:

a) computing an approximation image $g_{k+1}$ at a next larger scale $k + 1$ by applying a low pass filter LP to the approximation image $g_k$ corresponding to the current iteration $k$, and subsampling the result in proportion to the reduction in spatial frequency bandwidth, using however the original image $u_0$ as input to said low pass filter in the course of the first iteration;
b) computing a detail image $b_k$ as the pixelwise difference between the approximation image $u_k$ corresponding to the current iteration and the approximation image $u_{k+1}$ at a next larger scale computed according the method sub (a), both images being brought into register by proper interpolation (represented by [↑ LP] in the flow chart) of the latter image; wherein the residual image $u_R$ is equal to the approximation image produced by the last iteration.

The corresponding reconstruction (which we will refer to as ordinary reconstruction, i.e. reconstruction without multiscale gradation) is done by applying the inverse transform, as depicted in Fig. 1b. In the described embodiment ordinary reconstruction is implemented by iterating R times the following procedure starting from the largest scale detail image $b_{R-1}$ and the residual image $v_R = u_R$:
computing the approximation image $v_k$ at the current scale $k$ by pixelwise adding the detail image $b_k$ at the same scale to the approximation image $v_{k+1}$ at the larger scale corresponding to the previous iteration, both images being brought into register by proper interpolation of the latter image, using however the residual image $v_R$ instead of said larger scale approximation image in the course of the first iteration.

The residual image will be a low-resolution image or in the extreme case, an image comprising only one single pixel, depending on the number of iterations in the decomposition.

The latter combination of forward and inverse multiscale transform is commonly known as the Burt pyramid transform.

In an alternative embodiment the image is decomposed into a weighted sum of predetermined basic detail images at multiple scales and occasionally a residual basic image by applying a transform to the image, the transform yielding a set of detail coefficients each expressing the relative contribution to the original image of one of a set of basis functions representing these basic detail images and occasionally a residual coefficient representing the relative contribution to the original image of a basis function representing the basic residual image.

The basis functions are continuous and non-periodic and have zero mean value except for the basis function that represents the basic residual image. An example of such basis functions are wavelets.

The transform is such that there exists an inverse transform which returns the original image or a close approximation thereof when being applied to the transform coefficients.

The image can be reconstructed by applying the inverse transform to the detail coefficients and the residual coefficient if generated.

While the contrast amplification in accordance with certain approaches of image gradation in the prior art was specified at successive scales by a series of gradient functions that represent the amount of contrast amplification as a function of grey value at the corresponding scale, in the current invention a different approach is taken.

According to one embodiment of the invention, a single gradation curve or function is constructed at a chosen scale. This scale may be applied to the smallest scale image, i.e. to "scale 0" which is at the scale of the original image or to the full-size image, or alternatively may be applied at a larger scale, i.e. at scaled down version of the original image. The choice for a larger scale may be inspired by an attempt to reduce the processing power required to perform the calculations. As opposed to some of the techniques disclosed in the state of the art and referenced above, no multiple gradation curves will be applied to different subsets, differently scaled images or decomposition intermediaries, as this would yield artefacts at the subset interfaces.

This single gradation curve is constructed by means of analysis of different segmented image portions that represent a certain tissue type, such as for instance bone, soft tissue, lung tissue, metal implants, other implants, air cavities, and alike.

Segmented image portions or segments are obtained through a process called image segmentation. Image segmentation is the process of splitting up an image into multiple segments or image objects by identifying features in the image and consecutively identifying the pixels that may be associated with this feature. The output of such an image segmentation process may be represented by image masks or segmentation maps, or alternatively by image object boundaries.

An image mask or segmentation map is typically embodied as a binary overlay image of the original image, having preferably the same spatial resolution as the image on which the segmentation was performed, and wherein the corresponding binary pixels of the image mask or segmentation map are set to "1" in case that a pixel can be associated with the feature, and "0" when this is not the case.

Essentially, the segmentation allows to isolate and identify the portions of an image wherein the selected feature is present, enabling a targeted gradation processing of the part of the image that comprises the feature. This approach yields the advantage that domain knowledge concerning the optimal gradation processing for a certain tissue type may be applied selectively on the specific tissue-related pixels only.

In the invention, the image is segmented to produce a set of image objects for the different relevant tissue types that are present in the image. Several general-purpose algorithms and techniques have been developed for image segmentation, and are available to the skilled person. Such algorithms may be AI-based. To be useful, these techniques must typically be combined with a domain's specific knowledge in order to effectively solve the domain's segmentation problems. Therefore, a number of different and object-specific algorithms are used in parallel to each other to segment the different objects, features or tissue types.

After segmentation, a number of statistical operations may be performed on the image objects that are the outputs of the segmentation algorithms. For instance, a histogram may be generated for each image object, based on which a tissue dependent gradation function is calculated. Alternatively, parameters to characterize the gradation functions for each tissue type (or image feature) may be calculated from different statistical operations that are performed on the image objects, such as mean, median, percentiles, or alike, or a combination thereof.

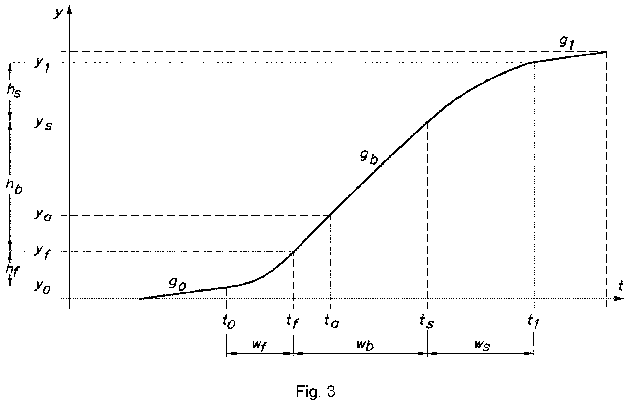

In general, the gradation function for a single tissue type is composed of three contiguous segments, as depicted in Fig. 3, termed foot, body and shoulder segments, respectively. The segments are defined in such a way, that the composite gradation function is continuous along its entire domain, and also its derivative is continuous.

The body segment is linear, and it ensures fixed predefined gradient $g_b$ across the body subrange $w_b$, which is intended to coincide with the most relevant subrange of pixel values. The foot segment spanning the foot subrange $w_f$ provides a gradual increase of gradient from a predefined initial gradient $g_0$ up to the body gradient $g_b$. The corresponding subrange is considered a transition zone from the lowest pixel values that carry no diagnostically relevant information, up to the most relevant body subrange. The foot segment is characterized by its subrange width $w_f$ and height $h_f$ on the ordinate axis. Its average gradient $g_f$ is defined by the ratio $h_f/w_f$. The initial ordinate value of the foot segment corresponds with the smallest value of the ordinate range $y_0$, i.e. the smallest possible value of the output image. The transition point from foot to body is specified by the abscissa $t_f$. The shoulder segment spanning the subrange $w_s$ provides a gradual decrease from the body gradient $g_b$ down to a predefined final gradient $g_1$. This segment is characterized by its width $w_s$ and a predefined average gradient $g_s$, which defines the ratio $h_s/w_s$, in which $h_s$ is the shoulder segment height on the ordinate axis. The final ordinate value of the shoulder is made to coincide with the greatest value of the ordinate range $y_1$.

The body segment has a predefined gradient $g_b$ and a predefined anchor point $t_a$. The anchor point has a predefined output pixel value $y_a$. This condition ensures that contrast and density remain fixed in the anchor point.

The width of the foot, body and shoulder segments is not specified explicitly. Instead, for each individual image three characteristic pixel values are determined, which specify the lower foot bound $t_0$, the anchor point $t_a$ and the upper shoulder bound $t_1$.

The other parameters that determine the shape of the composite gradation function are predefined, i.e. they do not depend on any characteristic of the individual images. Given the predefined parameters and the parameters $t_0$, $t_a$ and $t_1$ which are determined specifically for each image, a composite gradation function is determined that spans the cumulative abscissa subrange $w_f + w_b + w_s$ and the corresponding ordinate range $[y_0, y_1]$, in compliance with the above requirements of continuity.

By inserting a series of scale-specific conversion functions in the reconstruction process of a multi-scale contrast enhancement algorithm, it is possible to specify grey values to density mapping. Such a multi-scale gradation is implemented by inserting a series of scale-specific conversion functions in the reconstruction process and represents another embodiment of the invention. At each stage in the reconstruction process where a conversion function is inserted, the latter is applied to the approximation image at a scale corresponding to the current iteration, and the result of the conversion is used as the input of the next iteration. By an appropriate choice of the series of conversion functions it is possible to specify the contrast amplification as a function of grey value and scale, and to specify grey value-to-density mapping independently from detail contrast amplification.

Further specific features for preferred embodiments of the invention are set out in the dependent claims.

The embodiments of the methods of the present invention are generally implemented in the form of a computer program product adapted to carry out the method steps of the present invention when run on a computer. The computer program product is commonly stored in a computer readable carrier medium such as a CD-ROM. Alternatively the computer program product takes the form of an electric signal and can be communicated to a user through electronic communication.

## Brief description of drawings

Fig. 1a gives a schematic overview of a multi-scale decomposition step, according to the Burt pyramid transform. Whereas Fig. 1b illustrates the corresponding reconstruction step.

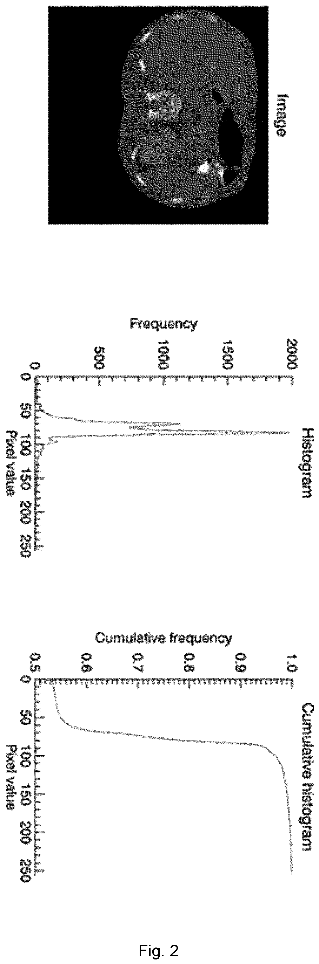

Fig. 2 illustrates how a medical gray value image can be processed into a histogram, which reflects the frequency of all gray values in the original image. A cumulative histogram gives the same histogram information in a different format: it gives the relation between the cumulative frequency of all gray values in the image.

Fig. 3 shows an embodiment of a large-scale gradation curve composed of three contiguous segments with linear extensions.

## Description of embodiments

In the following detailed description, reference is made in sufficient detail to the above referenced drawings, allowing those skilled in the art to practice the embodiments explained below.

X-rays emitted by a source of radiation are transmitted through a patient and recorded on a temporary storage medium or are captured directly by a digital imaging detector. The recorded latent image on the temporary storage medium is subsequently read-out or digitized into digital raw image, while the captured image by the digital image detector directly produces a digital raw image.

This digital raw image is subsequently processed by what is called an imaging pipeline, which may comprise different processing steps to -for instance- normalize and de-noise the acquired raw image, followed by a number of filtering and contrast enhancement steps to improve the diagnostic quality.

For example, in a preliminary step the digital signal representation of an image is subjected to a conversion according to a square root function, in order to make the pixel values proportional to the square root of the radiation dose recorded on the photostimulable phosphor screen detector. The resulting image is called a raw digital image.

One of the main sources of noise in the image is quantum mottle, which has a Poisson distribution. The square root conversion ensures that the noise statistics is transformed into a Gaussian distribution, with a standard deviation that is independent of dose. The latter preprocessing of the digital image is not essential, but it greatly simplifies the mathematics of the subsequent processing stages, because the noise can then be assumed roughly uniform across the raw image.

Next, the digital raw image may be subjected to a multiscale decomposition. The image is decomposed into at least two detail images representing detail at several successive scales and a residual image (further referred to as multiscale representation), according to a multiscale transform.

This technique has been described extensively in the prior art, such as for instance in EP 527 525. The pixels of the detail images represent the amount of variation of pixel values of the original image at the scale of the detail image, whereby scale refers to spatial extent of these variations.

A residual image can also be generated as a result of the decomposition, and is an approximation of the original image with omission of all variations comprised in the detail images. The detail images at subsequent scales (or resolution levels) are called multiscale layers, or simply layers.

From the multiscale representation and/or the raw digital image a number of values such as noise level, gain factor, local contrast to noise ratio (CNR) estimations are derived. These values will be used in the following steps.

In the next step the multiscale representation is subjected to a normalisation procedure to cancel out disturbing fluctuations that are due to dose variations, different exposure parameters, different patient latitude etc.

This is followed by a reduction of excess contrast in the image. This step comprises a limitation of the signal range by applying a conversion In another embodiment, a different number of anchor points may be applied but only on condition that they also determine the shape of the feature specific gradation curve $gm_i(t)$.

The reproduction of subtle details is enhanced by means of an amplifying component that is superposed on the function for limiting the signal range.

In the following processing step the small-scale edges and textures are rendered by controlling the contrast enhancement of details as a function of the scale in the multiscale representation.

Next the image is subjected to a tissue-specific contrast enhancement. This enhancement step makes use of a segmentation map derived from the raw image.

In the subsequent step the pixels of the multiscale representation are locally attenuated or amplified depending upon local contrast-to-noise ratio, which quantity discriminates between homogeneous and nonhomogeneous image regions.

Next the processed multiscale representation is subjected to a reconstruction step by applying the inverse of the decomposition transform to the modified detail images.

In the course of reconstruction, a series of scale-specific conversion functions are consecutively applied to the partially reconstructed image, in order to adjust contrast amplification as a function of both grey value and scale. The latter process will be referred to as multiscale gradation. The thus obtained pixel values are the driving values for the hard- or softcopy reproducing device, further on referred to as density values

The processing applied to the image representation of the radiation image comprises a multiscale contrast enhancement. The image is first decomposed into a weighted sum of basis image components at several scales by applying a decomposition transform. The components of the multiscale representation are referred to as detail images. The pixel values of the multiscale representation correspond with the contrast of elementary image components, relative to their close neighbourhood.

This multiscale decomposition step is followed by contrast enhancement steps wherein the pixel values of the multiscale representation are amplified or weakened in order to obtain the envisaged contrast enhancement.

In the final step of the pyramidal reconstruction the modified components are recombined into a grey value image by applying the inverse of the decomposition transform. In accordance with the present invention the latter step incorporates the cascaded application of scale-specific conversion functions.

It is at this point in the imaging pipeline that the final image gradation step is performed. The gradation function of the invention is applied to the contrast enhanced image and is calculated from the image data in the obtained segmentation maps from the segmentation process. As stated earlier, the segmentation process identifies the pixels in an image that can be attributed to a feature that is present in the image. The image that is used as the input for the segmentation processing may be the contrast enhanced image or a raw or unprocessed image. The relevant features in a medical image that preferably are subject to segmentation are for instance: the tissue type (bone, soft tissue, fibrosis, necrotic tissue, air, lung tissue, implants, ...), the image portion (background image, collimated region in an image, ...), or recognizable objects (such as an implant, a foreign object, ...).

The image segmentation processing can be performed on different image scales, i.e. from the smallest-scale image $V_0$, to a larger-scale image $V_L$. It is common not to perform a segmentation algorithm on the native image size, but rather on a downscaled image which comes at the benefit of a lower processing expense.

In a first embodiment, separate optimal gradation curves are calculated for each segmentation result, which are then combined into a joint gradation curve that is applied to the contrast enhanced image.

In a preferred embodiment and as a first step, at least 2 image features are segmented from the contrast enhanced image $V_L$. Therefore, at least 2 segmentation algorithms are applied to the contrast enhanced image $V_L$, such that the at least 2 image features $i \in [1,2, ... n]$ are obtained, and result in at least 2 segmentation maps or image masks $m_i$.

Next, for each segmentation map $m_i$ for feature $i$, a sub-histogram $hist(t_{m_i})$ is calculated from the image pixels in the contrast enhanced image that are represented in the corresponding segmentation map. The histogram of the pixels applying to a certain segmentation map $m_i$ for feature i are called sub-histogram $hist(t_{mi})$, as this histogram applies to a portion of data of the original contrast enhanced image $V_L$ only.

In a specific embodiment, a series of 3 anchor points $t_{kmi}$ are derived from said sub-histogram $hist(t_{mi})$ that determine the shape of the feature specific gradation curve $gm_i(t)$. In this preferred embodiment and as already explained above, three anchor points are determined from each sub-histogram, which specify the lower foot bound $t_{0m_i}$, the anchor point $t_{am_i}$ and the upper shoulder bound $t_{1m_i}$ of the feature specific gradation curve $gm_i(t)$.

The anchor points $t_{kmi} = [t_{0mi}, t_{ami}, t_{1mi}]$ are derived from the cumulative sub-histogram $hist_{cumul}(t_{mi})$ by determining the abscissa values for the anchor points when corresponding to pre-defined percentile values $p_{kmi}$ as ordinate values. An example of such set of ordinate values would be $p_{kmi} = [5\%, 50\%, 95\%]$ based on which the anchor point values $t_{kmi} = [t_{0mi}, t_{ami}, t_{1mi}]$ on the abscissa can be determined.

As an example where a first image feature ($i = 1$) would correspond to soft tissue in an image, the corresponding anchor points would typically result in a set of anchor point values such as for instance $t_{km_1} = [10,35,70]$. A second image feature ($i = 2$) corresponding to bone in an image, would typically result in a different set of anchor point values $t_{km_2} = [35,60,85]$, indicating that the gravity center of the bone data in a contrast enhanced image would be found in higher density areas of the image.

Besides determining the anchor point values $t_{kmi}$ for each image feature $i$, also a set of anchor point gradients $g_{kmi}$ is defined. The selection of these anchor point gradients $g_{kmi}$ in the corresponding anchor points $t_{kmi}$ is image feature dependent, and is based on prior knowledge relating to the technical domain of medical imaging. For instance, it has been found that the anchor point gradients $g_{kmi}$ that correspond to anchor points $t_{km_1}$ and that apply to soft tissue ($i = 1$) provide the best gradation results when $g_{km_1} = [1.6,4,1.6]$. And, on a similar note, for bone ($i = 1$) when $g_{km_2} = [1,2,1]$.

In a final step, the different gradation curves for each segmentation result, which are characterized by their anchor points $t_{kmi} = [t_{0mi}, t_{ami}, t_{1mi}]$ and respective anchor point gradients $g_{kmi} = [g_{0mi}, g_{ami}, g_{1mi}]$, are combined into a combined or large-scale gradation function.

Based on the different sets of anchor point values $t_{kmi}$ and anchor point gradients $g_{kmi}$, the combined or large-scale gradation function is specified by its own predefined ordinate values in the anchor points: for instance $y_k = [10\%, 50\%, 90\%]$. The preferred ordinate values are expressed as a percentage of the output range.

In another embodiment, the collection of predefined ordinate values in the anchor points $(y_k)_i$ for all image features $i$ are combined into a sorted set of ordinate values, such that they are merged into a monotonic set of values. Subsequently, and for each image feature $i$, the interpolated abscissa values $t_{km_i}$, are found by interpolation or, where needed, extrapolation of $t_{km_i}$ at non defined ordinate values. The result is that for all image features $i$ a feature specific gradation curve is found comprising the same set of ordinate values in the anchor points.

In a preferred embodiment, the relative presence of the number pixels of a gray value interval $N(t_{km})$ = $[t_{km-dt}, t_{km+dt}]$ belonging to mask $m$ compared to the number of pixels of said gray value interval in all considered segmentation masks $m$ = [0 ...$M$] is taken into account when constructing the combined gradation function.

The relative presence of an image feature such as a tissue type is expressed as a tissue weight factor $w_{km}$, wherein,

$$w_{km} = \left(\frac{N(t_{km})}{N(t_k)}\right)^q ; q = 2$$

with

$$N(t_k) = \sum_{m=0}^{M} N(t_{km})$$

such that the combined abscissa values of the combined gradation are calculated as:

$$t_k = \frac{\sum_{m=0}^{M} w_{km} \, t_{km}}{\sum_{m=0}^{M} w_{km}}$$

In yet another embodiment, the gradation curve is applied during multiscale reconstruction processing, whereby a scale-specific conversion function is inserted at each successive stage of the reconstruction process.

The scale-specific conversion functions are derived from a series of scale-specific gradient functions that specify the amount of contrast amplification as a function of grey value at successive scales. The gradient function for a predefined large scale is in this case the derivative of the final gradation function (density as a function of greyscale.) as defined above.

The gradient curve for small scale is predefined by density values for each image object, and calculated as a weighted average of these predefined values.

$$c_k = \frac{\sum_{m=0}^{M} w_{km} \, c_{km}}{\sum_{m=0}^{M} w_{km}}$$

The gradient functions of intermediate scales evolve gradually from the shape of the gradient function for large scale to the shape of a gradient function for small scale.

**Claims**

1. Method for gradation of a digital grey value image, comprising the steps of:

   - segmenting said image into multiple image objects by identifying the pixels where an image feature is present,
   - perform a statistical operation on said image objects,
   - calculate parameters that characterize an image feature specific gradation curve for each image object based on data obtained from said statistical operation said feature specific gradation curve being expressed as a predetermined number of anchor points,
   - combining said different image feature specific gradation curves into a final gradation curve,
   - applying said final gradation curve to said image.

2. Method according to Claim 1, whereby combining said image feature specific gradation curves is accomplished by attributing a weight of each feature specific gradation curve for each gray scale interval across the entire gray scale range in said image.

3. Method according to Claim 2, wherein said weight being dependent on a pixels count in said gray scale interval for each image object, compared to a pixels count of pixels in said gray scale interval summed over all image objects.

4. Method according to Claim 2 and 3, wherein said feature specific gradation curve is expressed as a combination of a predetermined number of anchor points and anchor point gradients.

5. Method according to Claim 2, 3 and 4, wherein the abscissa of said anchor points are defined as a predetermined percentile of said image object.

6. Method according to Claim 2, 3 and 4, wherein the ordinate and gradient of said anchor points are predetermined values.

7. Method according to Claim 1, 2, 3 and 4, wherein the statistical operation is the composition and analysis of a histogram.

8. Method for gradation of a contrast enhanced digital grey value image according to any of the previous claims, wherein said image feature is at least one of bone, soft tissue, lung tissue, metal implants, other implants or air cavities.

9. Method for gradation of a contrast enhanced digital grey value image according to any of the previous claims, wherein said attributed weight is being expressed as a tissue weight factor $w_{km}$, wherein,

$$w_{km} = \left(\frac{N(t_{km})}{N(t_k)}\right)^q ; q = 2$$

with

$$N(t_k) = \sum_{m=0}^{M} N(t_{km})$$

10. Method for gradation of a contrast enhanced digital grey value image according to any of the previous claims, wherein the method is applied to a scaled down version of the original image.

11. Method to generate a contrast enhanced version of a grey value image, by applying contrast amplification to a multiscale representation of the grey value image, followed by the method of any of the previous claims.

12. Method according to Claim 11, wherein the image feature specific gradation curves are additionally calculated for different decomposition levels or scales

13. Method according to Claim 1, wherein said gradation curve is applied during a multiscale reconstruction by applying a scale-specific conversion function at each successive stage of the reconstruction process and wherein scale-specific conversion function is based on data obtained from said statistical operation on said image objects.

Fig. 1a

Fig. 1b

Fig. 2

Fig. 3

Europäisches
Patentamt

European
Patent Office

Office européen
des brevets

# EUROPEAN SEARCH REPORT

Application Number

EP 21 21 1196

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 1 517 269 A1 (AGFA GEVAERT [BE]) 23 March 2005 (2005-03-23) | 1,2,4-8, 10-13 | INV. G06T5/00 |
| A | * paragraphs [0018], [0124] – [0127], [0104] – [0106], [0116] – [0117] * | 3,9 | G06T5/40 |
| Y | NING XU ET AL: "A new global-based video enhancement algorithm by fusing features of multiple region-of-interests", VISUAL COMMUNICATIONS AND IMAGE PROCESSING (VCIP), 2011 IEEE, IEEE, 6 November 2011 (2011-11-06), pages 1-4, XP032081352, DOI: 10.1109/VCIP.2011.6115958 ISBN: 978-1-4577-1321-7 | 1,2,4-8, 10-13 | |
| A | * sections I., III., III.A, III.B; figure 3 * | 3,9 | |

TECHNICAL FIELDS SEARCHED (IPC)

G06T

The present search report has been drawn up for all claims

| Place of search | Date of completion of the search | Examiner |
|---|---|---|
| Munich | 5 May 2022 | Krawczyk, Grzegorz |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 21 1196

This annex lists the patent family members relating to the patent documents cited in the above-mentioned European search report.
The members are as contained in the European Patent Office EDP file on
The European Patent Office is in no way liable for these particulars which are merely given for the purpose of information.

05-05-2022

| Patent document cited in search report | | Publication date | Patent family member(s) | | Publication date |
|---|---|---|---|---|---|
| EP 1517269 | A1 | 23-03-2005 | EP | 1347413 A1 | 24-09-2003 |
| | | | EP | 1517269 A1 | 23-03-2005 |
| | | | JP | 2003283927 A | 03-10-2003 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 527525 A
- EP 1341125 A